# EUROPEAN PATENT APPLICATION

(11) **EP 4 679 263 A1**
(43) Date of publication of application: **14.01.2026**
(21) Application number: 23926976.4
(22) Date of filing: 27.06.2023
(51) Int. Cl.: G06F 9/30, G06F 12/02

(54) **METHOD AND APPARATUS FOR VECTOR INSTRUCTION TABLE FILLING AND LOOKUP IN PROCESSOR, AND ELECTRONIC DEVICE**

(30) Priority: 10.03.2023 CN 202310225470
(71) Applicant: Beijing Vcore Technology Co.,Ltd., Beijing 100190 (CN)
(72) Inventor: LI, Zusong, Beijing 100190 (CN); HUAN, Dandan, Beijing 100190 (CN); SHANG, Jiawei, Beijing 100190 (CN); YANG, Ting, Beijing 100190 (CN); QIU, Jian, Beijing 100190 (CN)
(74) Representative: Petraz, Gilberto Luigi
(86) International application number: PCT/CN2023/102852
(87) International publication number: WO 2024/187629

(57) **Abstract**

The present disclosure provides a method and apparatus for vector instruction table filling and lookup in a processor, and an electronic device. The method comprises: configuring a vector instruction lookup table in a preset storage space of the processor, wherein the storage capacity of the vector instruction lookup table is the product of the number of items and the number of bits of storage items; determining table tilling types corresponding to candidate vector registers waiting for table filling, wherein the table filling types comprise a first type and a second type, the first type is that the product of the register width and the maximum number of register groups is larger than or equal to the storage capacity, and the second type is that the product of the register width and the maximum number of register groups is smaller than the storage capacity; and using table filling rules corresponding to the table filling types to write first elements stored in target vector registers among the plurality of candidate vector registers into the vector instruction lookup table, and using a preset table lookup rule to acquire, from the vector instruction lookup table, a second element to be looked up, such that the performance of the processor can be improved.

## Description

### CROSS-REFERENCE TO RELATED APPLICATIONS

This disclosure is based on and claims priority to Chinese patent application NO.202310225470.7, filed on March 10, 2023, the entire contents of which are incorporated herein by reference.

### TECHNICAL FIELD

The disclosure relates to the field of computer technology, and in particular to a method and an apparatus for a vector instruction table filling and lookup in a processor, and an electronic device.

### BACKGROUND

With the development of big data and artificial intelligence (AI) technologies, there are increasingly higher demands for the performance of data analysis applications and AI algorithm execution, which imposes greater requirements on computer processing capabilities. Vector processing technology has become a key focus in both academia and industry. In the vector processing technology, vector functions are commonly employed. The vector function refers to an algorithmic function in computer programs that internally utilizes vector instructions and vector registers. By using the vector instructions and the vector registers, such functions enable data-parallel computation during internal operations.

A table lookup method is an optimization method used in computer program development. It precomputes required numerical results and stores the results in constant arrays, allowing runtime retrieval directly from the array rather than through real-time computation, thus reducing computational overhead. The vector table lookup method specifically refers to the application of the table lookup method within the vector functions. In this context, table items are utilized over a period of time, where table filling and lookup operations in the vector registers consume vector register resources and vector register ports. When the vector registers are insufficient, frequent data transfers between the vector registers and memory are required, which degrades pipeline performance.

### SUMMARY

The disclosure provides a method and an apparatus for a vector instruction table filling and lookup in a processor, and an electronic device, and is intended to solve, at least to some extent, one of the technical problems in the related art.

A first aspect embodiment of the disclosure provides a method for a vector instruction table filling and lookup in a processor. The method includes: configuring a vector instruction lookup table in a preset storage space of the processor, in which a storage capacity of the vector instruction lookup table is a product of a number of storage items and a number of bits in the storage item; determining table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; writing a first element stored in a target vector register in a plurality of candidate vector registers into the vector instruction lookup table by using a table filling rule corresponding to the table filling type; and obtaining a second element to be looked up from the vector instruction lookup table by using a preset lookup rule.

A second aspect embodiment of the disclosure provides an apparatus for a vector instruction table filling and lookup in a processor. The apparatus includes: a configuration module, configured to configure a vector instruction lookup table in a preset storage space of the processor, in which a storage capacity of the vector instruction lookup table is a product of a number of storage items and a number of bits in the storage item; a determining module, configured to determine table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; and a table filling module, configured to write a first element stored in a target vector register in a plurality of candidate vector registers into the vector instruction lookup table by using a table filling rule corresponding to the table filling type; and a lookup module, configured to obtain a second element to be looked up from the vector instruction lookup table by using a preset lookup rule.

A third aspect embodiment of the disclosure provides an electronic device. The electronic device includes: at least one processor; and a memory communicatively coupled to the at least one processor; in which the memory is configured to store instructions executable by the at least one processor, when the instructions are executed by the at least one processor, the at least one processor is caused to perform the method for a vector instruction table filling and lookup in a processor in embodiments of the disclosure.

A fourth aspect embodiment of the disclosure provides a non-transitory computer readable storage medium. The non-transitory computer readable storage medium stores computer instructions, in which the computer instructions are configured to enable a computer to perform the method for a vector instruction table filling and lookup in a processor in embodiments of the disclosure.

A fifth aspect embodiment of the disclosure provides a computer program product. The computer program product includes a computer program, in which when the computer program is executed by a processor, the method for a vector instruction table filling and lookup in a processor in embodiments of the disclosure is realized.

In embodiments of the disclosure, by configuring a vector instruction lookup table in a preset storage space of the processor, in which a storage capacity of the vector instruction lookup table is a product of a number of storage items and a number of bits in the storage item; determining table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; writing a first element stored in a target vector register in a plurality of candidate vector registers into the vector instruction lookup table by using a table filling rule corresponding to the table filling type; and obtaining a second element to be looked up from the vector instruction lookup table by using a preset lookup rule; the consumption of vector register space and vector register ports may be reduced, memory access frequency may be reduced, and the table filling and lookup operation may be performed quickly by using the table filling rule corresponding to the table filling type, thus improving the processor performance.

Additional aspects and advantages of the present invention will be set forth in part in the description which follows, and in part will be obvious from the description, or will be learned by practice of the present invention.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a flow chart illustrating a method for a vector instruction table filling and lookup in a processor according to an embodiment of the disclosure.
FIG. 2A is a schematic diagram illustrating a structure of a 256-bit width vector register according to an embodiment of the disclosure.
FIG. 2B is a schematic diagram of a vector instruction lookup table corresponding to the vector register in FIG. 2A.
FIG. 3A is a schematic diagram illustrating a structure of a 128-bit width vector register according to an embodiment of the disclosure.
FIG. 3B is a schematic diagram of a vector instruction lookup table corresponding to the vector register in FIG. 3A.
FIG. 4A is a schematic diagram illustrating a structure of another 256-bit width vector register according to an embodiment of the disclosure.
FIG. 4B is a schematic diagram of a vector instruction lookup table corresponding to the vector register in FIG. 4A.
FIG. 5 is a flow chart illustrating a method for a vector instruction table filling and lookup in a processor according to another embodiment of the disclosure.
FIG. 6 is a flow chart illustrating a method for a vector instruction table filling and lookup in a processor according to another embodiment of the disclosure.
FIG. 7 is a block diagram illustrating an apparatus for a vector instruction table filling and lookup in a processor according to another embodiment of the disclosure.
FIG. 8 is a block diagram illustrating an exemplary electronic device suitable for implementing embodiments of the disclosure.

### DETAILED DESCRIPTION

In order to provide a clearer understanding of the purposes, features, and advantages of the disclosure as described above, embodiments of the disclosure are further described below. It should be noted that embodiments and features of embodiments of the disclosure may be combined with each other without conflict.

The following description provides many specific details to facilitate a thorough understanding of the disclosure. However, the disclosure may be implemented in other methods different from the method described herein. Clearly, the embodiments in the specification are only a portion of examples of the embodiments of the disclosure, not all of the embodiments.

It should be noted that an execution subject of a method for a vector instruction table filling and lookup in a processor in embodiments of the disclosure may be an apparatus for a vector instruction table filling and lookup in a processor. The apparatus may be realized in a software way and/or a hardware way, and the apparatus may be configured in an electronic device, and the electronic device may include, but is not limited to, a terminal, a server-side, etc.

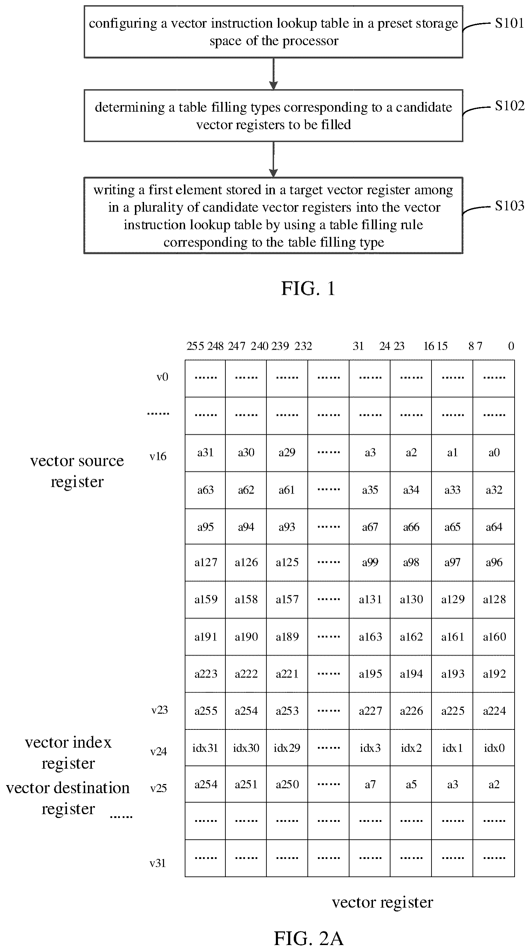

FIG. 1 is a flow chart illustrating a method for a vector instruction table filling and lookup in a processor according to an embodiment of the disclosure. As shown in FIG. 1, the method includes blocks S101 to S103.

At block S101: a vector instruction lookup table is configured in a preset storage space of the processor.

In an embodiment of the disclosure, a dedicated storage space may be implemented on a processor chip, where the vector instruction lookup table (also referred to as a lookup table) is configured. The vector instruction lookup table is configured to store elements of the vector register.

The vector instruction lookup table includes M storage items, each configured to store one element of a vector instruction, with each storage item having a corresponding number of bits (N) in the storage item. In this case, the number (M) of storage items is equal to an index bit width power of the vector lookup table index of 2, that is, M=2 ^{index bit width}. The number of bits (N) in the storage item equals to an effective element width (EEW) of an element (destination operand) written in the vector instruction lookup table, i.e., N=EEW of the destination operand. In an embodiment of the disclosure, the EEW may be configured to match a standard element width (SEW) of the vector register to be operated. For example, if the SEW=8, a corresponding number of bits (N) in each storage item is 8 bits. Further, the embodiment of the disclosure may calculate a product of the number of storage items (M) and the number of bits (N) in the storage item, and determine the product as a storage capacity of the vector instruction lookup table, i.e., storage capacity=M×N.

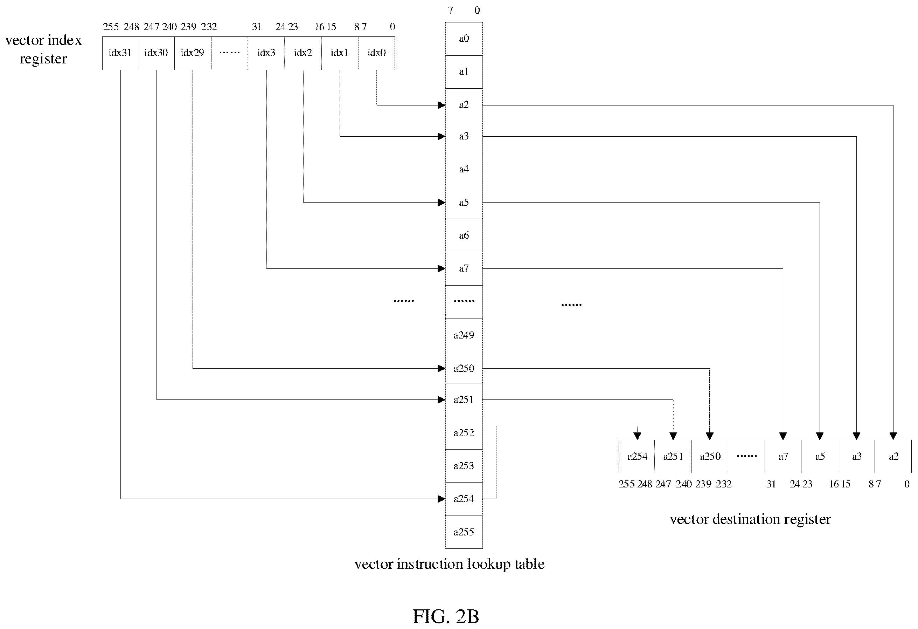

In an embodiment, FIG. 2A is a schematic diagram illustrating a structure of a 256-bit width vector register according to an embodiment of the disclosure. FIG. 2B is a schematic diagram of a vector instruction lookup table corresponding to the vector register in FIG. 2A. As shown in FIG. 2B, the embodiment of the disclosure configures a vector instruction lookup table of, for example, 256 items (i.e., M=256), including storage items a0, a1,..., a255. If an SEW of each item is an 8-bit integer, i.e., N=8, the storage capacity of the vector instruction lookup table=256*8=2048 bits. If the SEW is any other value, it applies by analogy.

At block S102: table filling types corresponding to candidate vector registers to be filled are determined.

All vector registers supported by the processor may be referred to as the candidate vector registers. For example, the 32 vector registers (v0-v31) included in the vector instruction set (RISC-V) may be referred to as the candidate vector registers, that is, in an embodiment of the disclosure, there may be a plurality of candidate vector registers.

In practical implementations, the candidate vector register may be configured with different register vector widths (VLEN), such as 64 bits, 128 bits, 256 bits, or 512 bits.

For example, as shown in FIG. 2A, the 32 candidate vector registers (v0-v31) included in the vector instruction set (RISC-V) each have a register vector width (VLEN) of 256 bits (0-255), i.e., a 256-bit vector register. Each vector register stores 32 elements (e.g., v16 stores elements a0 to a31), an SEW of each element is 8 bits. The length multiplier (LMUL) of each register group is 8.

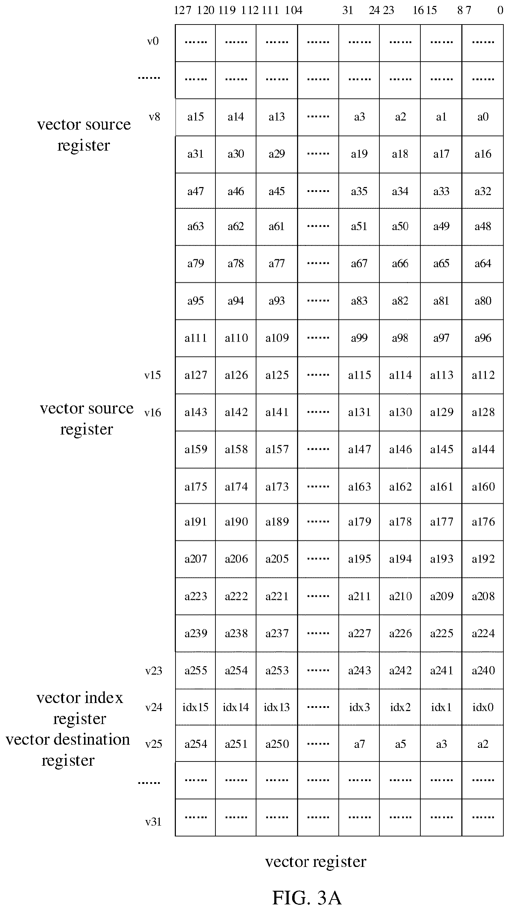

For example, FIG. 3A is a schematic diagram illustrating a structure of a 128-bit width vector register according to an embodiment of the disclosure. As shown in FIG. 3A, each vector register of the 32 candidate vector registers (v0-v31) has a register vector width (VLEN) of 128 bits (0-127), i.e., a 128-bit vector register. Each vector register stores 16 elements (e.g., v16 stores elements a0 to a15), an SEW of each element is 8 bits. The length multiplier (LMUL) of each register group is 8.

In an embodiment of the disclosure, for candidate vector registers with different register vector widths (VLEN), corresponding table filling types need to be determined. The table filling types in the embodiment of the disclosure include, for example, a first type and a second type.

In an embodiment of the disclosure, the product of the register vector width (VLEN) of the candidate vector register and the length multiplier of register groups (the maximum number of register vectors in the register group, LMUL) may be calculated, i.e., VLEN*maximum LMUL. Further, a size relationship between VLEN*maximum LMUL and the storage capacity (M*N) of the vector instruction lookup table is determined. With respect to the first type, the product of the register vector width (VLEN) and the length multiplier of register groups is greater than or equal to the storage capacity. With respect to the second type, the product of the register vector width (VLEN) and the length multiplier of the register groups is lower than the storage capacity. It should be noted that in the vector instruction set (RISC-V), a length multiplier of register groups LMUL is 8.

For example, the storage capacity (M*N) may be 2048 bits. As shown in FIG. 2A, if the register vector width (VLEN) of the candidate vector register is 256 bits, the length multiplier of register groups is 8, and VLEN*maximum LMUL is equal to M*N, then the table filling type corresponding to the candidate vector register of 256 bits is the first type. As another example, as shown in FIG. 3A, if the register vector width (VLEN) of the candidate vector register is 128 bits, the length multiplier of register groups is 8, and VLEN*maximum LMUL is lower than M*N, then the table filling type corresponding to the candidate vector register of 128 bits is the second type.

After configuring the vector instruction lookup table, the embodiments of the disclosure may further determine the table filling type corresponding to each candidate vector register as the first type or the second type.

At block S103: a first element stored in a target vector register is written in a plurality of candidate vector registers into the vector instruction lookup table by using a table filling rule corresponding to the table filling type.

The table filling rule may also be referred to as a vector table filling instruction (table_fill), which is configured to write the first element stored in the target vector register in the plurality of candidate vector registers into the vector instruction lookup table. That is, the first element is filled into a corresponding item of the vector instruction lookup table.

Among the plurality of candidate vector registers, a register to be written (filled) into the vector instruction lookup table may be determined as a target vector register. The target vector register may be a single vector register or a plurality of vector registers (i.e., a group of vector registers). Thus, the embodiment of the disclosure may determine one vector register or a group of vector registers as the target vector register to be written into the vector instruction lookup table. The target vector register may be determined through any feasible method.

The element (data) in the target vector register to be written into the vector instruction lookup table may be determined as the first element. That is, the content (element) of the target vector register is filled into the vector instruction lookup table. In the case that the target vector registers are the plurality of vector registers, the first element may be all elements stored in the plurality of target vector registers. Alternatively, in the case that the target vector register is a single register, the first elements may be all or part of elements stored in the target vector register.

In an embodiment of the disclosure, different table filling rules may be configured for different table filling types. That is, the candidate vector register of the first type and the candidate vector register of the second type may correspond to different table filling rules respectively. The embodiment may determine the target vector register by using the table filling rule corresponding to the table filling type and write the first element stored in the target vector register into the vector instruction lookup table. The specific details of the table filling rules are not limited herein.

In some embodiments, a second element to be looked up may be obtained from the vector instruction lookup table by using a preset lookup rule; and the second element may be written into a preset vector destination register.

The element currently required to be looked up in the vector instruction lookup table may be determined as the second element. That is, the second element belongs to the first element. The second element may be one element or a plurality of elements.

In an embodiment of the present closure, a table lookup rule (also referred to as a vector table lookup instruction) may be preconfigured. The table lookup rule is configured to obtain the second element from the vector instruction lookup table. That is, the embodiment of the disclosure may directly read vector elements from the vector instruction lookup table instead of the vector register, thus reducing occupation of vector register space and register ports and reducing memory access frequency. The table lookup rule may follow any arbitrary logic. In some embodiments, a form of the table lookup rule (i.e., table lookup instruction) may be: table_find.v vdest, vidx; table_find.v represents a process of performing the vector table lookup on the vector instruction set, vidx represents the vector index register, and vdest represents the vector destination register.

In some embodiments, the table lookup rule may be to first determine a vector index register (vidx). For example, a register may be randomly selected from the plurality of candidate vector registers as the vector index register (vidx).

Further, an index bit width is determined based on the number of storage items (M) of the vector instruction lookup table, i.e., the index bit width is determined based on M=2^{index bit width}. For example, if the vector instruction lookup table in the embodiment of the present closure has 256 items (i.e., M=256), then 256=2⁸, that is, the index bit width of the vector instruction lookup table in the embodiment of the disclosure is 8 bits.

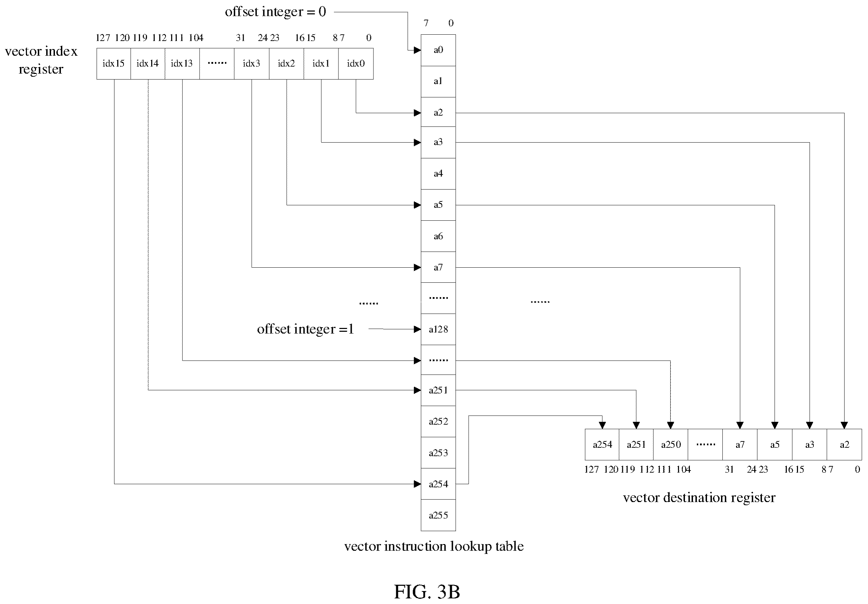

Further, a ratio of the register vector width (VLEN) of the vector index register (vidx) to the index bit width is calculated as a number of indexes. For example, as shown in FIG. 2A and FIG. 2B, if a randomly selected vector index register (vidx) from the plurality of candidate vector registers has a register vector width (VLEN) of 256 bits, a number of indexes is 32. This means the vector index register (vidx) of 256 bits may be divided into 32 indexes of 8 bits, labeled as idx0, idx1, idx2, idx3,..., idx29, idx30, idx31. Similarly, as shown in FIG. 3A and FIG. 3B, if a randomly selected vector index register (vidx) from the plurality of candidate vector registers has a register vector width (VLEN) of 128 bits, a number of indexes is 16. This means the vector index register (vidx) of 128 bits may be divided into 16 indexes of 8 bits, labeled as idx0, idx1, idx2, idx3,..., idx29, idx30, idx31.

Further, in an embodiment of the present closure, a parallel lookup is performed on the vector instruction lookup table based on the number of indexes and a target index value to be looked up to obtain the second element corresponding to the target index value. Specifically, the first element in the vector instruction lookup table has a corresponding index value (e.g., a sequence number of the storage item). For example, if there are 256 storage items, the index values range from 0 to 255. The index value corresponding to the current element to be looked up may be referred to as the target index value, and the element looked up corresponding to the target index value may be referred to as the second element.

For example, as shown in FIG. 2A and FIG. 2B, in an embodiment of the present closure, if the vector index register (vidx) of 256 bits is divided into 32 indexes of 8 bits (idx0, idx1, idx2, idx3,..., idx29, idx30, idx31), and there are 32 target index values{254, 251, 250, ..., 7, 5, 3, 2}, the embodiment of the present closure may perform the parallel lookup on the 32 target index values by using the 32 indexes of 8 bits, idx0 , idx1, idx2, idx3, ......, idx29, idx30, and idx31 are 2 (binary 00000010), 3 (binary 00000011), 5 (binary 00000101), 7 (binary 00000111), ......, 250 (binary 11111010), 251 (binary 11111011), and 254 (binary 11111110) respectively. That is, the 32 second elements obtained from the vector instruction lookup table by performing the parallel lookup based on the index (vidx) are a2, a3, a5, a7, ......, a250, a251, and a254, with 8 bits per element.

Similarly, as shown in FIG. 3A and FIG. 3B, in an embodiment of the present closure, if the vector index register (vidx) of 128 bits is divided into 16 indexes of 8 bits (idx0, idx1, idx2, idx3,..., idx15), and there are 16 target index values{254, 251, 122, ..., 7, 5, 3, 2}, the embodiment of the present closure may perform the parallel lookup on the 16 target index values using the 16 indexes of 8 bits, idx0 , idx1, idx2, idx3, ......, idx15 are 2 (binary 00000010), 3 (binary 00000011), 5 (binary 00000101), 7 (binary 00000111), ......, 250 (binary 11111010), 251 (binary 11111011), and 254 (binary 11111110) respectively. That is, the 16 second elements obtained from the vector instruction lookup table by performing the parallel lookup based on the index (vidx) are a2, a3, a5, a7, ......, a250, a251, and a254, with 8 bits per element.

Further, in an embodiment of the present closure, the second element is written into a preset vector destination register. For example, a vector register (e.g., v25) may be randomly selected from the plurality of candidate vector registers as the vector destination register (vdest). The embodiment of the disclosure may write the obtained second element into the vector destination register (vdest) to complete the vector table lookup operation. For example, the 32 looked up second elements (e.g., a2, a3, a5, a7, ......, a250, a251, a254, etc.) are written back to the vector destination register (vdest) (e.g., v25), and a value of the vector destination register (vdest) is obtained as {a254, a251, a250, ......, a7, a5, a3, a2}. For example, the 16 looked up second elements (e.g., a2, a3, a5, a7, ......, a250, a251, a254, etc.) are written back to the vector destination register (vdest) (e.g., v25), and a value of the vector destination register (vdest) is obtained as {a254, a251, a250, ......, a7, a5, a3, a2}.

In some embodiments, the vector index register (vidx) and the vector destination register (vdest) must have the same number as elements but may differ in element width. In this case, the EEW and a number of vector registers in the register group when the element bit width in the register is EEW (EMUL) of the vector index register (vidx) and the vector destination register (vdest) are not equal to the SEW and the LMUL, but the EEW/EMUL = SEW/LMUL, which guarantees that the number of elements is the same. For example, the EEW of the vector index register (vidx) is equal to the SEW, and the EMUL of the vector index register (vidx) is equal to the LMUL, and the EEW of the vector index register (vidx) is equal to 2*SEW, and the EMUL of the vector index register (vidx) is equal to 2*LMUL, i.e., the element width of the vector index register (vidx) is not the same as the element width of the vector destination register (vdest). In this case, in an embodiment of the disclosure, in the process of writing the second element into the preset vector destination register, a size relationship between the element width of the vector destination register (vdest) and the element width of the vector index register (vidx) may be determined. In the case that the element width of the vector destination register is greater than the element width of the vector index register, and the element width of the vector destination register is the same as the number of bits of the storage item, the table lookup instruction in an embodiment of the disclosure is a widening instruction. The number of vector destination registers is determined based on the relationship of EEW/EMUL = SEW/LMUL, i.e., a group of the plurality of vector destination registers (vdest). The number of the group of vector destination registers EMUL = EEW*LMUL/SEW. Further, the second element is written into the plurality of vector destination registers.

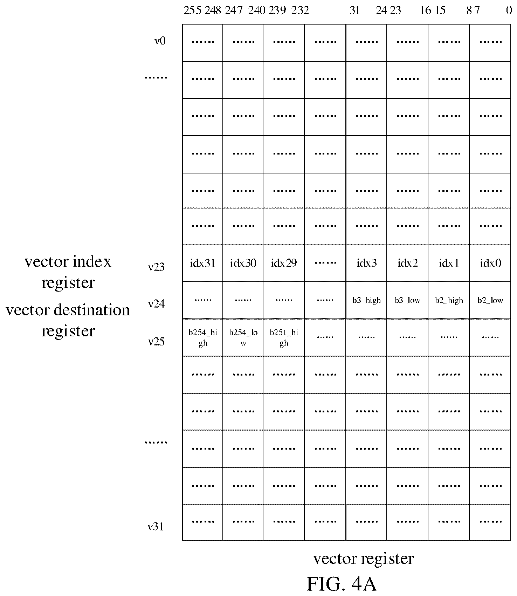

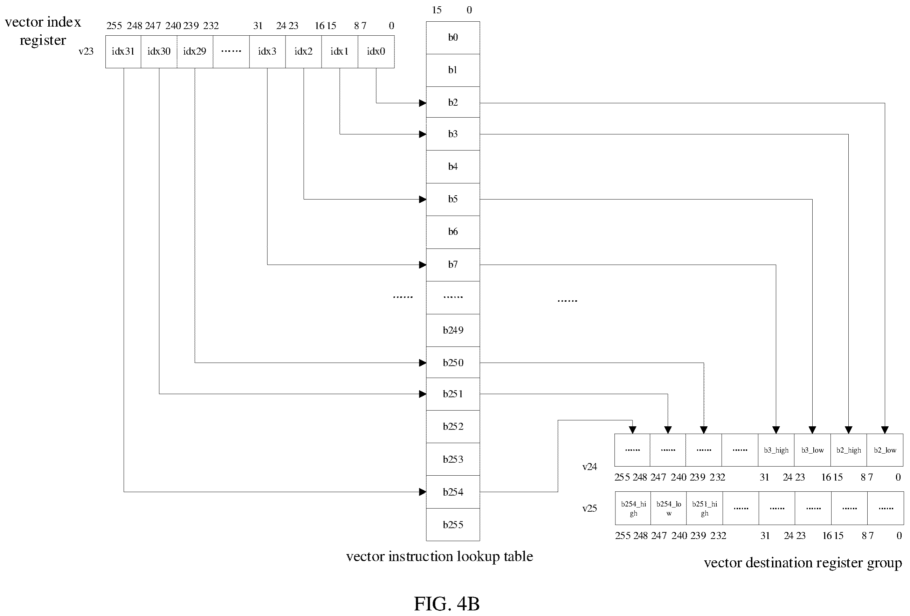

For example, FIG. 4A is a schematic diagram illustrating a structure of another 256-bit width vector register according to an embodiment of the disclosure. FIG. 4B is a schematic diagram of a vector instruction lookup table corresponding to the vector register in FIG. 4A. As shown in FIG. 4B, an embodiment of the disclosure configures a vector instruction lookup table, for example, 256 items (i.e., M=256), including storage items a0, a1, ..., a255. If the SEW of each item is a 16-bit integer, i.e., N=16, the storage capacity of the vector instruction lookup table=256*16=4096 bits. If the SEW is any other value, it applies by analogy. As shown in FIG. 4A and FIG. 4B, a vector index register (vidx) (LMUL=1) has a register vector width (VLEN) of 256 bits. The element width of each element is EEW=SEW=8 bits, M=256 items, and N=16 bits. The element width (EEW) of vector destination register (vdest) =16, and the number of vector destination registers (EMUL) =EEW*LMUL/SEW=16*1/8=2. That is, there are 2 vector destination registers in a group, e.g., v24 and v25. The 32 elements obtained by performing the parallel lookup from the vector instruction lookup table based on the index (vidx) are b2, b3, b5, b7, ......, b250, b251, and b254, with 16 bits per element, and are written back to the vector destination registers v24 and v25. The value of vector destination register v24 is obtained as {......, b7, b5, b3, b2} and the value of vector destination register v25 is obtained as {b254, b251, b250, ......}, which completes the vector lookup table. The _low and _high in FIG. 4A and FIG. 4B represent the low 8 bits and high 8 bits of the element respectively.

In practical implementations, the table lookup instruction may be written as table_find.v vdest, vidx; vdest represents the vector destination register, and vidx represents the vector index register. For example, if vidx is v24 and vdest is v25, the table lookup instruction is table_find.v v25, v24.

In embodiments of the disclosure, by configuring a vector instruction lookup table in a preset storage space of the processor, in which a storage capacity of the vector instruction lookup table is a product of a number of storage items and a number of bits in the storage item; determining table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; writing a first element stored in a target vector register in a plurality of candidate vector registers into the vector instruction lookup table by using a table filling rule corresponding to the table filling type; and obtaining a second element to be looked up from the vector instruction lookup table by using a preset lookup rule; the consumption of vector register space and vector register ports may be reduced, memory access frequency may be reduced, and the table filling and lookup operation may be performed quickly by using the table filling rule corresponding to the table filling type, thus improving the processor performance.

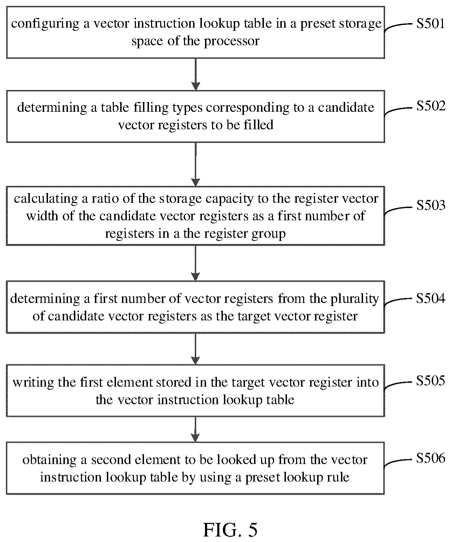

FIG. 5 is a flow chart illustrating a method for a vector instruction table filling and lookup in a processor according to an embodiment of the disclosure. As shown in FIG. 5, the method includes blocks S501 to S506.

At block S501: a vector instruction lookup table is configured in a preset storage space of the processor.

At block S502: table filling types corresponding to candidate vector registers to be filled are determined.

The specific descriptions of S501 to S502 are described in the above embodiments and will not be repeated herein.

At block S503: a ratio of the storage capacity to the register vector width of the candidate vector register as a first number of registers in the register group.

In an embodiment of the disclosure, in the case that the table filling type corresponding to the candidate vector register is the first table filling type, the table filling rule in the embodiment of the disclosure involves first calculating the ratio of the storage capacity to the register vector width (VLEN) of the candidate vector register and determining the ratio as a first number (LMUL) of the actual vector registers in the register group, i.e., the first number (LMUL) =M×N/VLEN.

For example, for a candidate vector register with a register vector width (VLEN) of 256 bits, and M×N=2048, the first number (LMUL) =8, i.e., LMUL=2048/256=8. For a candidate vector register with a register vector width (VLEN) of 512 bits, the first number (LMUL) =4. For a candidate vector register with a register vector width (VLEN) of 1024 bits, the first number (LMUL) =2. For a candidate vector register with a register vector width (VLEN) of 2048 bits, the first number (LMUL) =1. For a candidate vector register with a register vector width (VLEN) of 4096 bits, the first number (LMUL) =1/2, i.e., half of a register forms a group. For a candidate vector register with a register vector width (VLEN) of 8192 bits, the first number (LMUL) =1/4, i.e., a quarter of a register forms a group. For a candidate vector register with a register vector width (VLEN) of 16384 bits, the first number (LMUL) =1/8, i.e., one-eighth of a register forms a group, and so on.

At block S504: a first number of vector registers from the plurality of candidate vector registers is determined as the target vector register.

That is, the first number (LMUL) of vector registers from the 32 candidate vector registers is determined as a group of target vector register. For example, 8 (LMUL) vector registers are selected as a group of target vector registers; or 4 (LMUL) vector registers are selected as a group of target vector registers; or 2 (LMUL) vector registers are selected as a group of target vector registers. The target vector register may be determined from the 32 candidate vector registers in any manner, e.g., by randomly selecting a group of target vector registers.

In some embodiments, to enhance the efficiency of table filling and subsequent table lookup, an embodiment of the present closure may determine a consecutive group of vector registers as the target vector register.

In an embodiment of the present closure, a source register serial number (vsrc) may be first determined from serial numbers of the plurality of candidate vector registers. For example, the serial numbers of the 32 candidate vector registers are 0, 1, 2, ..., 31, in an embodiment of the present closure, the source register serial number (vsrc) may be determined from the plurality of serial numbers.

For example, the source register serial number (vsrc) may be any serial number of the plurality of serial numbers (0, 1, 2, ..., 31).

For example, the source register serial number may be aligned with the first number (LMUL). For example, if LMUL is 8, the source register serial number (vsrc) of the vector table filling instruction (table filling rule) may be any of 0, 8, 16, or 24. If LMUL is 4, the source register serial number (vsrc) of the vector table filling instruction may be any of 0, 4, 8, 12, 16, 20, 24, or 28. If LMUL is 2, the source register serial number (vsrc) of the vector table filling instruction may be any of 0, 2, 4, 6, 8, 10, 12, 14, 16, 18, 20, 22, 24, 26, 28, or 30. If LMUL is 1/8, 1/4, 1/2, or 1, the source register serial number (vsrc) of the vector table filling instruction may be any register serial number.

Further, the first number of consecutive registers starting from the source register serial number is determined as the target vector register.

For example, as shown in FIG. 2A and FIG. 2B, if the register vector width (VLEN) is 256 bits and LMUL is 8, and the source register serial number (vsrc) is 16 (i.e., v16), 8 consecutive registers starting from serial number 16 may be determined as a group of target vector registers, i.e., the target vector registers are v16 to v23.

At block S505: the first element stored in the target vector register is written into the vector instruction lookup table.

In practical applications, the table filling rule (table filling instruction) corresponding to the first type may be preconfigured as table_fill.v vsrc, table_fill.v represents the vector table filling in the vector instruction set, and vsrc represents the source register serial number. For example, if the source register serial number (vsrc) is 16, the table filling instruction is table_fill.v v16. Further, elements a0-a255 (i.e., the first element) from a group of 8 target vector registers v16 to v23 are filled into the vector instruction lookup table from item 0 to entry 255 by using the table_fill.v v16 instruction. That is, in an embodiment of the present closure, the number of first elements in the target vector registers is the same as the number of entries in the vector instruction lookup table. As a result, the embodiment of the present closure may write elements in vector registers of 256 bits or more into the vector instruction lookup table by using the table filling rule.

At block S506: a second element to be looked up is obtained from the vector instruction lookup table by using a preset lookup rule.

The specific description of S506 is described in the above embodiments and will not be repeated herein.

In embodiments of the disclosure, by configuring a vector instruction lookup table in a preset storage space of the processor, in which a storage capacity of the vector instruction lookup table is a product of a number of storage items and a number of bits in the storage item; determining table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; writing a first element stored in a target vector register in a plurality of candidate vector registers into the vector instruction lookup table by using a table filling rule corresponding to the table filling type; and obtaining a second element to be looked up from the vector instruction lookup table by using a preset lookup rule; the consumption of vector register space and vector register ports may be reduced, memory access frequency may be reduced, and the table filling and lookup operation may be performed quickly by using the table filling rule corresponding to the table filling type, thus improving the processor performance. Further, the embodiment of the present closure may write elements in vector registers of 256 bits or more into the vector instruction lookup table by using the table filling rule.

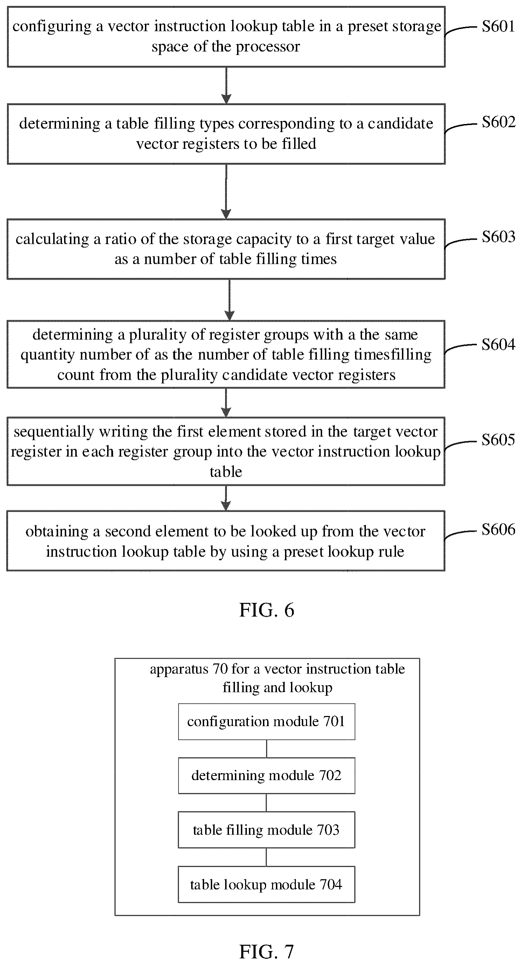

FIG. 6 is a flow chart illustrating a method for a vector instruction table filling and lookup in a processor according to an embodiment of the disclosure. As shown in FIG. 6, the method includes blocks S601 to S606.

At block S601: a vector instruction lookup table is configured in a preset storage space of the processor.

At block S602: table filling types corresponding to candidate vector registers to be filled are determined.

The specific descriptions of S501 to S502 are described in the above embodiments and will not be repeated herein.

At block S603: a ratio of the storage capacity to a first target value is calculated as a number of table filling times.

The first target value is the product of the register vector width of the candidate vector register and the length multiplier of the register groups.

In an embodiment of the disclosure, the table filling type corresponding to the candidate vector register is the second type. In this case, the table filling rule in the embodiment of the disclosure involves first calculating the ratio of the storage capacity (M*N) to the first target value, and determining the ratio as the number of table filling times. The first target value is the product of the register vector width (VLEN) of the candidate vector register and the length multiplier of the register groups (maximum LMUL = 8) (VLEN*maximum LMUL). That is, the number of table filling times = M*N / (VLEN * maximum LMUL).

The number of table filling times corresponds to the number of table filling instructions. Each table filling instruction may write the first element of a group of target vector registers into the vector instruction lookup table. That is, when the table filling type is the second type, a plurality of table filling instructions are required to perform a plurality of table filling operations.

For example, as shown in FIG. 3A and FIG. 3B, if the storage capacity of the vector instruction lookup table (M*N) is 2048, the vector register vector width (VLEN) is 128, and the maximum LMUL is 8, the number of table filling operations (i.e., the number of table filling instructions) is M*N / (VLEN * maximum LMUL) = 2048 / 128 * 8 = 2. That is, two table filling instructions are required to perform two table filling operations. For example, if the storage capacity of the vector instruction lookup table (M*N) is 2048, the vector register vector width (VLEN) is 64, and the maximum LMUL is 8, the number of table filling operations (i.e., the number of table filling instructions) is 2048 / 64 * 8 = 4. That is, four table filling instructions are required to perform four table filling operations.

At block S604: a plurality of register groups with the same quantity as the number of table filling times are determined from the plurality candidate vector registers.

Each register group includes a second number of target vector registers. In an embodiment of the closure, the number of vector registers in each register group may be referred to as the second number (LMUL). The second number LMUL may be a fixed value, such as LMUL = 8. That is, 8 target vector registers are formed together as one register group.

In an embodiment of the closure, the plurality of register groups with the same quantity as the number of table filling times may be determined from the plurality candidate vector registers. For example, if the table filling times is 2, two register groups are determined, with each register group including 8 target vector registers. The plurality of register groups may be determined in any manner, such as randomly selecting 8 target vector registers to form a register group.

In some embodiments, a plurality of source register serial numbers with the same quantity as the number of table filling times are determined from the serial numbers of the plurality of candidate vector registers. There is at least the second number of intervals between the source register serial numbers.

For example, if the table filling times is 2 (i.e., 2 table filling instructions) and the serial numbers of the plurality of candidate vector registers are 0, 1, 2, ..., 31, the embodiment of the closure may select 2 serial numbers from the plurality of serial numbers to serve as the source register serial numbers (vsrc). There is at least the second number (8) of intervals between the 2 source register serial numbers. For instance, the two source register serial numbers (vsrc) may be 8 and 16.

Further, the second number of consecutive registers starting from each source register serial number are determined as each register group. That is, each source register serial number is determined as a starting bit for a register group, and the second number of consecutive registers starting from the starting bit are determined as the target vector register in the register group.

For example, if the two source register serial numbers (vsrc) are 8 and 16, the embodiment of the closure may determine v8 to v15 as one register group and v16 to v23 as another register group.

At block S605: the first element stored in the target vector register in each register group is sequentially written into the vector instruction lookup table.

That is, the embodiment of the closure may first write the first element stored in the target vector register in the register group (v8 to v15) into the vector instruction lookup table, and then writes the first element stored in the target vector register in the register group (v16 to v23) into the vector instruction lookup table.

In some embodiments, in the table filling process, the embodiment of the closure may also determine a plurality of offset integers (imm) (which can also be referred to as offset values) corresponding to the plurality of register groups. The offset integer (imm) is a non-negative integer. The plurality of offset integers are integers from 0 to n, and n is a value obtained by subtracting one from the number of table filling times. That is, the offset integers (imm) ranges from 0 to M*N/VLEN*maximum LMUL-1.

For example, if VLEN is 128 bits and LMUL is 8, then the number of table filling times is 2 (requiring 2 table filling instructions to complete). The offset integers (imm) corresponding to the register groups are 0 and 1. That is, the offset integer (imm) of the first table filling instruction is 0 (binary 00000000), and the offset integer (imm) of the second table filling instruction is 1 (binary 00000001). Further, if VLEN is 64 bits and LMUL is also 8, the number of table filling times is 4 (requiring 4 table filling instructions to complete). The offset numbers (imm) corresponding to the register groups are 0, 1, 2, and 3. That is, the offset integer (imm) of the first table filling instruction is 0 (binary 00000000), the offset integer (imm) of the second table filling instruction is 1 (binary 00000001), the offset integer (imm) of the third table filling instruction is 2 (binary 00000010), and the offset integer (imm) of the fourth table filling instruction is 3 (binary 00000011).

Further, a product of the offset integer (imm) corresponding to each register group and a second target value is calculated as a start filling bit of the register group in the vector instruction lookup table. The start filling bit may also be referred to as the starting fill item, which describes a starting item written into the vector instruction lookup table by each register group. The second target value is the ratio of the first target value (VLEN*maximum LMUL) to the number of bits in the storage item (N). That is, the start filling bit = imm * VLEN * maximum LMUL / N.

For example, if the number of bits in the storage item (N) = 8, VLEN = 128 bits, and the offset integers (imm) corresponding to the two register groups are 0 and 1, then the start filling bit of the first register group is 0 * 128 * 8 / 8 = 0, and the start filling bit of the second register group is 1 * 128 * 8 / 8 = 128.

Further, the first element stored in the target vector register in each register group is sequentially written into the vector instruction lookup table based on the start filling bit.

In practical applications, the table filling instruction corresponding to the second type may be written as: table_fill.v vsrc imm, where table_fill.v represents the vector table filling in the vector instruction set, vsrc represents the source register serial number, and imm represents the offset integer. For example, if VLEN is 128 bits, LMUL is 8, the offset integers (imm) are 0 and 1, and the source register serial number (vsrc) are vector register 8 and vector register 16, then the two table filling instructions may be written as table_fill.v v8 0 and table_fill.v v16 1. That is, the table_fill.v v8 0 instruction fills the first elements a0-a127 of the 8 target vector registers from v8 to v15 into the vector instruction lookup table from item 0 to item 127. The table_fill.v v16 1 instruction fills the elements a128-a255 of the 8 vector registers from v16 to v23 into the vector instruction lookup table from item 128 to item 255. Thus, the embodiment of the present closure may write elements in vector registers lower than 256 bits into the vector instruction lookup table by using the table filling rule.

It should be noted that the table filling process and the table lookup process in embodiments of the disclosure may be implemented sequentially or separately.

In embodiments of the disclosure, by configuring a vector instruction lookup table in a preset storage space of the processor, in which a storage capacity of the vector instruction lookup table is a product of a number of storage items and a number of bits in the storage item; determining table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; writing a first element stored in a target vector register in a plurality of candidate vector registers into the vector instruction lookup table by using a table filling rule corresponding to the table filling type; and obtaining a second element to be looked up from the vector instruction lookup table by using a preset lookup rule; the consumption of vector register space and vector register ports may be reduced, memory access frequency may be reduced, and the table filling and lookup operation may be performed quickly by using the table filling rule corresponding to the table filling type, thus improving the processor performance. Further, the embodiment of the present closure may write elements in vector registers lower than 256 bits into the vector instruction lookup table by using the table filling rule.

In order to realize the above embodiments, the disclosure also provides an apparatus for a vector instruction table filling and lookup in a processor.

FIG. 7 is a block diagram illustrating an apparatus for a vector instruction table filling and lookup in a processor according to another embodiment of the disclosure.

As shown in FIG. 7, the apparatus 70 for a vector instruction table filling and lookup in a processor includes a configuration module 701, a determining module 702, a table filling module 703, and a table lookup module 704.

The configuration module 701 is configured to configure a vector instruction lookup table in a preset storage space of the processor, in which a storage capacity of the vector instruction lookup table is a product of a number of storage items and a number of bits in the storage item.

The determining module 702 is configured to determine table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity.

The table filling module 703 is configured to write a first element stored in a target vector register in a plurality of candidate vector registers into the vector instruction lookup table by using a table filling rule corresponding to the table filling type.

The table lookup module 704 is configured to obtain a second element to be looked up from the vector instruction lookup table by using a preset lookup rule.

In some embodiments, in the case that the table filling type is the first type, the table filling module 703 is specifically configured to: calculate a ratio of the storage capacity to the register vector width of the candidate vector register as a first number of registers in the register group; determine the first number of vector registers from the plurality of candidate vector registers as the target vector register; and write the first element stored in the target vector register into the vector instruction lookup table.

In some embodiments, the table filling module 703 is specifically configured to: determine a source register serial number from serial numbers of the plurality of candidate vector registers; and determine the first number of consecutive registers starting from the source register serial number as the target vector register.

In some embodiments, in the case that the table filling type is the second type, the table filling module 703 is specifically configured to: calculate a ratio of the storage capacity to a first target value as a number of table filling times, in which the first target value is the product of the register vector width of the candidate vector register and the length multiplier of the register groups; determine a plurality of register groups with the same quantity as the number of table filling times from the plurality candidate vector registers, in which each register group includes a second number of target vector registers; and sequentially write the first element stored in the target vector register of each register group into the vector instruction lookup table.

In some embodiments, the table filling module 703 is specifically configured to: determine a plurality of source register serial numbers with the same quantity as the number of table filling times from the serial numbers of the plurality of candidate vector registers, in which there is at least the second number of intervals between the source register serial numbers; and determine the second number of consecutive registers starting from each source register serial number as each register group.

In some embodiments, the apparatus 70 further includes: a first calculating module, configured to determine a plurality of offset integers corresponding to the plurality of register groups, in which the plurality of offset integers are integers from 0 to n, and n is a value obtained by subtracting one from the number of table filling times; and a second calculating module, configured to calculate a product of the offset integer corresponding to each register group and a second target value as a start filling bit of the register group in the vector instruction lookup table, in which the second target value is a ratio of the first target value to the number of bits in the storage item. The table filling module 703 is specifically configured to: sequentially write the first element stored in the target vector register in each register group into the vector instruction lookup table based on the starting fill bit.

In some embodiments, the table lookup module 704 is specifically configured to: determine a vector index register; determine an index bit width based on the number of storage items of the vector instruction lookup table; calculate a ratio of the register vector width of the vector index register to the index bit width as a number of indexes; perform a parallel lookup on the vector instruction lookup table based on the number of indexes and a target index value to be looked up to obtain the second element corresponding to the target index value; and write the second element into a preset vector destination register.

In some embodiments, in the case that an element width of the vector destination register is greater than an element width of the vector index register and the element width of the vector destination register is equal to the number of bits in the storage item, the table lookup module is configured to: determine a plurality of vector destination registers; and write the second element into the plurality of vector destination registers.

In some embodiments, a form of the table filling rule corresponding to the first type is: table_fill.v vsrc, and a form of the table filling rule corresponding to the second type is: table_fill.v vsrc, imm; table_fill.v represents vector table filling in a vector instruction set, vsrc represents the source register serial number, and imm represents the offset integer.

In some embodiments, a form of the lookup rule is: table_find.v vdest, vidx, table_find.v represents vector table lookup in the vector instruction set, vidx represents the vector index register, and vdest represents the vector destination register.

In embodiments of the disclosure, by configuring a vector instruction lookup table in a preset storage space of the processor, in which a storage capacity of the vector instruction lookup table is a product of a number of storage items and a number of bits in the storage item; determining table filling types corresponding to candidate vector registers to be filled, in which the table filling type includes a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; writing a first element stored in a target vector register in a plurality of candidate vector registers into the vector instruction lookup table by using a table filling rule corresponding to the table filling type; and obtaining a second element to be looked up from the vector instruction lookup table by using a preset lookup rule; the consumption of vector register space and vector register ports may be reduced, memory access frequency may be reduced, and the table filling and lookup operation may be performed quickly by using the table filling rule corresponding to the table filling type, thus improving the processor performance.

According to embodiments of the disclosure, the disclosure also provides an electronic device, a readable storage medium, and a computer program product.

In order to achieve the above embodiments, a computer program product is provided in the embodiment of the disclosure. When instructions in the computer program product are executed by a processor, the method for a vector instruction table filling and lookup in a processor as described in the above embodiments of the disclosure is implemented.

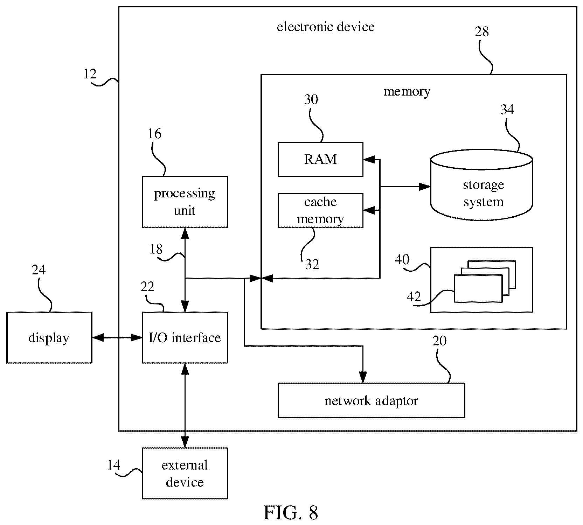

FIG. 8 is a block diagram illustrating an example computer device configured to implement the embodiment of the disclosure. An electronic device 12 illustrated in FIG. 8 is only an example, which may not bring any limitation for functions and scope of embodiments of the disclosure.

As illustrated in FIG. 8, the electronic device 12 is embodied in the form of a general-purpose computer device. Assemblies of the electronic device 12 may include but not limit to: one or more processors 16, a system memory 28, and a bus 18 connecting different system assemblies (including the system memory 28 and a processor 16).

The bus 18 represents one or more of several bus structures, including a storage bus or a storage controller, a peripheral bus, a circular accelerating port and a processor or a local bus with any bus structure in various bus structures. For example, these architectures include but not limit an ISA (Industry Standard Architecture) bus, a MAC (Micro Channel Architecture) bus, an enhancing ISA bus, a VESA (Video Electronics Standards Association) local bus and a PCI (Peripheral Component Interconnection) bus.

The electronic device 12 typically includes various computer system readable mediums. These mediums may be any usable medium that may be accessed by the electronic device 12, including volatile mediums and non-volatile mediums, removable and non- removable mediums.

The memory 28 may include computer system readable mediums with the form of the volatile mediums, such as a RAM (Random Access Memory) 30 and/or a cache memory 32. The electronic device 12 may further include other removable/non-removable, volatile/non-volatile computer system storage mediums. Only as an example, a storage system 34 may be configured to read and write non-removable, non-volatile magnetic mediums (not illustrated in FIG. 8, which is usually called "a hard disk driver").

Although not illustrated in FIG. 8, the storage system 34 may provide a hard disk driver configured to read and write the removable non-volatile magnetic disc (such as "a diskette"), and a disc driver configured to read and write a removable non-volatile disc (such as a CD-ROM (Compact Disc Read Only Memory), a DVD-ROM (Digital Video Disc Read Only Memory) or other light mediums). Under these circumstances, each driver may be connected with the bus 18 by one or more data medium interfaces. The memory 28 may include at least one program product, the program product has a set of program modules (such as at least one), and these program modules are configured to execute functions of each embodiment of the disclosure.

A program/utility 40, having a set (at least one) of program modules 42, may be stored in memory 28 by way of example, and not limitation, as well as an operating system, one or more application programs, other program modules, and program data. Each of examples may include an implementation of a networking environment. The program module 42 usually executes functions and/or methods described in embodiments of the disclosure.

The electronic device 12 may communicate with one or more external apparatuses 14 (such as a keyboard, a pointing device, a display 24), further may communicate with one or more devices enabling a user to interact with the electronic device 12, and/or may communicate with one or more other computer devices( such as a network card, modem). Such communication may occur via Input / Output (I/O) interface 22. And, the electronic device 12 further may communicate with one or more networks (such as LAN (Local Area Network), WAN (Wide Area Network) and/or public network, such as Internet) via a network adapter 20. As illustrated in FIG. 8, the network adapter 20 communicates with other modules of the electronic device 12 via the bus 18. It should be understood that, although not illustrated in FIG. 8, other hardware and/or software modules may be used in combination with the electronic device 12, including but not limited to: microcode, device drivers, redundant processing units, external disk drive arrays, RAID (Redundant Array of Independent Disks) systems, tape drives, and data archival storage systems, etc..

The processing unit 16, by operating programs stored in the memory 28, executes various function applications and data processing, for example implementing a method for a vector instruction table filling and lookup in a processor provided in the above embodiments.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exaction construction that has been described above and illustrated in the accompanying drawings, and that various modifications and changes can be made without departing from the scope thereof. It is intended that the scope of the disclosure only be limited by the appended claims.

It should be noted that, in the description of the disclosure, terms such as "first" and "second" are used herein for purposes of description and are not intended to indicate or imply relative importance or significance. In addition, in the description of the disclosure, "a plurality of" means two or more than two, unless specified otherwise.

Any procedure or method described in a flow chart or described herein in other ways may be understood to include one or more modules, segments or portions of codes of executable instructions for achieving specific logical functions or steps in the procedure, and the scope of a preferred embodiment of the disclosure includes other implementations. The order of execution is different from that which is depicted or discussed, including executing functions in a substantially simultaneous manner or in an opposite order according to the related functions, which should be understood by those skilled in the art which embodiments of the disclosure belong to.

It should be understood that each part of the disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above embodiment method may be achieved by commanding the related hardware with a program. The program may be stored in a computer readable storage medium, and the program includes one or a combination of the steps in the method embodiments when operated on a computer.

In addition, each function unit of each embodiment of the disclosure may be integrated in a processing module, or these units may be separate physical existence, or two or more units are integrated in a processing module. The integrated module may be realized in a form of hardware or in a form of software function modules. When the integrated module is realized in the form of software function module and is sold or used as a standalone product, the integrated module may be stored in a computer readable storage medium.

The storage medium mentioned above may be a read-only memory, a magnetic disk or CD, etc.

In the description of the disclosure, reference throughout this specification to "an embodiment," "some embodiments," "an example," "a specific example," or "some examples," means that a particular feature, structure, material or feature described in connection with the embodiment or example is included in at least one embodiment or example of the disclosure. The appearances of the above phrases throughout this specification are not necessarily referring to the same embodiment or example. Moreover, the particular feature, structure, material or feature described may be combined in any one or more embodiments or examples in a suitable manner.

Although embodiments of the disclosure have been shown and described above, it should be understood that the above embodiments are exemplary and should not be construed as limiting the disclosure. The skilled in the art can make changes, modifications, substitutions and variations to the above embodiments within the scope of the disclosure.

## Claims

1. A method for a vector instruction table filling and lookup in a processor, comprising:
configuring a vector instruction lookup table in a preset storage space of the processor, wherein a storage capacity of the vector instruction lookup table is a product of a number of storage items and a number of bits in the storage item;
determining table filling types corresponding to candidate vector registers to be filled, wherein the table filling type comprises a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; and
writing a first element stored in a target vector register in a plurality of candidate vector registers into the vector instruction lookup table by using a table filling rule corresponding to the table filling type;
in the case that the table filling type is the first type, writing the first element stored in the target vector register in the plurality of candidate vector registers into the vector instruction lookup table by using the table filling rule corresponding to the table filling type comprises:
calculating a ratio of the storage capacity to the register vector width of the candidate vector register as a first number of registers in the register group;
determining a source register serial number from serial numbers of the plurality of candidate vector registers; and determining the first number of consecutive registers starting from the source register serial number as the target vector register; and
writing the first element stored in the target vector register into the vector instruction lookup table.

2. The method of claim 1, wherein in the case that the table filling type is the second type, writing the first element stored in the target vector register in the plurality of candidate vector registers into the vector instruction lookup table by using the table filling rule corresponding to the table filling type comprises:
calculating a ratio of the storage capacity to a first target value as a number of table filling times, wherein the first target value is the product of the register vector width of the candidate vector register and the length multiplier of the register groups;
determining a plurality of register groups with the same quantity as the number of table filling times from the plurality candidate vector registers, wherein each register group comprises a second number of target vector registers; and
sequentially writing the first element stored in the target vector register in each register group into the vector instruction lookup table.

3. The method of claim 2, wherein determining the plurality of register groups with the same quantity as the number of table filling times from the plurality candidate vector registers comprises:
determining a plurality of source register serial numbers with the same quantity as the number of table filling times from the serial numbers of the plurality of candidate vector registers, wherein there is at least the second number of intervals between the source register serial numbers ; and
determining the second number of consecutive registers starting from each source register serial number as each register group.

4. The method of claim 3, further comprising:
determining a plurality of offset integers corresponding to the plurality of register groups, wherein the plurality of offset integers are integers from 0 to n, and n is a value obtained by subtracting one from the number of table filling times; and
calculating a product of the offset integer corresponding to each register group and a second target value as a start filling bit of the register group in the vector instruction lookup table, wherein the second target value is a ratio of the first target value to the number of bits in the storage item;
wherein sequentially writing the first element stored in the target vector register in each register group into the vector instruction lookup table comprises:
sequentially writing the first element stored in the target vector register in each register group into the vector instruction lookup table based on the start filling bit.

5. The method of claim 1, further comprising:
obtaining a second element to be looked up from the vector instruction lookup table by using a preset lookup rule; and
writing the second element into a preset vector destination register.

6. The method of claim 5, wherein obtaining the second element to be looked up from the vector instruction lookup table by using the preset lookup rule comprises:
determining a vector index register;
determining an index bit width based on the number of storage items of the vector instruction lookup table;
calculating a ratio of the register vector width of the vector index register to the index bit width as a number of indexes; and
performing a parallel lookup on the vector instruction lookup table based on the number of indexes and a target index value to be looked up to obtain the second element corresponding to the target index value.

7. The method of claim 6, wherein in the case that an element width of the vector destination register is greater than an element width of the vector index register and the element width of the vector destination register is equal to the number of bits in the storage item, writing the second element into the preset vector destination register comprises:
determining a plurality of vector destination registers; and
writing the second element into the plurality of vector destination registers.

8. The method of claim 4, wherein
a form of the table filling rule corresponding to the first type is: table_fill.v vsrc, and a form of the table filling rule corresponding to the second type is: table_fill.v vsrc, imm; table_fill.v represents vector table filling in a vector instruction set, vsrc represents the source register serial number, and imm represents the offset integer.

9. The method of claim 6, wherein
a form of the lookup rule is: table_find.v vdest, vidx, table_find.v represents vector table lookup in the vector instruction set, vidx represents the vector index register, and vdest represents the vector destination register.

10. An apparatus for a vector instruction table filling and lookup in a processor, comprising:
a configuration module, configured to configure a vector instruction lookup table in a preset storage space of the processor, wherein a storage capacity of the vector instruction lookup table is a product of a number of storage items and a number of bits in the storage item;
a determining module, configured to determine table filling types corresponding to candidate vector registers to be filled, wherein the table filling type comprises a first type and a second type, with respect to the first type, a product of a register vector width and a length multiplier of register groups is greater than or equal to the storage capacity, and with respect to the second type, the product of the register vector width and the length multiplier of the register groups is lower than the storage capacity; and
a table filling module, configured to write a first element stored in a target vector register in a plurality of candidate vector registers into the vector instruction lookup table by using a table filling rule corresponding to the table filling type;
in the case that the table filling type is the first type, the table filling module is configured to:
calculate a ratio of the storage capacity to the register vector width of the candidate vector register as a first number of registers in the register group;
determine the first number of vector registers from the plurality of candidate vector registers as the target vector register; and
write the first element stored in the target vector register into the vector instruction lookup table;
the table filling module is configured to:
determine a source register serial number from serial numbers of the plurality of candidate vector registers; and
determine the first number of consecutive registers starting from the source register serial number as the target vector register.

11. The apparatus of claim 10, wherein in the case that the table filling type is the second type, the table filling module is configured to:
calculate a ratio of the storage capacity to a first target value as a number of table filling times, wherein the first target value is the product of the register vector width of the candidate vector register and the length multiplier of the register groups;
determine a plurality of register groups with the same quantity as the number of table filling times from the plurality candidate vector registers, wherein each register group comprises a second number of target vector registers; and
sequentially write the first element stored in the target vector register of each register group into the vector instruction lookup table.

12. The apparatus of claim 11, wherein the table filling module is configured to:
determine a plurality of source register serial numbers with the same quantity as the number of table filling times from the serial numbers of the plurality of candidate vector registers, wherein there is at least the second number of intervals between the source register serial numbers; and
determine the second number of consecutive registers starting from each source register serial number as each register group.

13. The apparatus of claim 12, further comprising:
a first calculating module, configured to determine a plurality of offset integers corresponding to the plurality of register groups, wherein the plurality of offset integers are integers from 0 to n, and n is a value obtained by subtracting one from the number of table filling times; and
a second calculating module, configured to calculate a product of the offset integer corresponding to each register group and a second target value as a start filling bit of the register group in the vector instruction lookup table, wherein the second target value is a ratio of the first target value to the number of bits in the storage item;
wherein the table filling module is configured to: sequentially write the first element stored in the target vector register in each register group into the vector instruction lookup table based on the starting fill bit.

14. The apparatus of claim 10, further comprising:
a table lookup module, configured to obtain a second element to be looked up from the vector instruction lookup table by using a preset lookup rule; and write the second element into a preset vector destination register.

15. The apparatus of claim 14, wherein the table lookup module is configured to:
determine a vector index register;
determine an index bit width based on the number of storage items of the vector instruction lookup table;
calculate a ratio of the register vector width of the vector index register to the index bit width as a number of indexes; and
perform a parallel lookup on the vector instruction lookup table based on the number of indexes and a target index value to be looked up to obtain the second element corresponding to the target index value.

16. The apparatus of claim 15, wherein in the case that an element width of the vector destination register is greater than an element width of the vector index register and the element width of the vector destination register is equal to the number of bits in the storage item, the table lookup module is configured to:
determine a plurality of vector destination registers; and
write the second element into the plurality of vector destination registers.

17. The apparatus of claim 13, wherein
a form of the table filling rule corresponding to the first type is: table_fill.v vsrc, and a form of the table filling rule corresponding to the second type is : table_fill.v vsrc, imm; table_fill.v represents vector table filling in a vector instruction set, vsrc represents the source register serial number, and imm represents the offset integer.

18. The apparatus of claim 15, wherein
a form of the lookup rule is: table_find.v vdest, vidx, table_find.v represents vector table lookup in the vector instruction set, vidx represents the vector index register, and vdest represents the vector destination register.

19. An electronic device, comprising:
at least one processor; and
a memory communicatively coupled to the at least one processor;
wherein the memory is configured to store instructions executable by the at least one processor, when the instructions are executed by the at least one processor, the at least one processor is caused to perform the method of any one of claims 1 to 9.

20. A non-transitory computer readable storage medium storing computer instructions, wherein the computer instructions are configured to enable a computer to perform the method of any one of claims 1 to 9.

21. A computer program product, comprising a computer program, wherein when the computer program is executed by a processor, the method of any one of claims 1 to 9 is realized.
